# EUROPEAN PATENT SPECIFICATION

(11) **EP 1 325 670 B1**
(45) Date of publication and mention of the grant of the patent: **21.09.2005**
(21) Application number: 00969732.7
(22) Date of filing: 10.10.2000
(51) Int. Cl.: H05B 33/08, H05B 37/02

(54) **ELECTROLUMINESCENT LIGHTING DEVICE**
ELEKTROLUMINESZIERENDE BELEUCHTUNGSVORRICHTUNG
DISPOSITIF D'ECLAIRAGE ELECTROLUMINESCENT

(43) Date of publication of application: 09.07.2003
(60) Divisional application: 05013718.1
(73) Proprietor: Elumina Lighting Technologies, Inc., Ontario L78 1G3 (CA)
(72) Inventor: DICKIE, Robert G., Newmarket, Ontario L3Y 4V8 (CA); TIERNEY, Kirkwood T., New Tecumseth, Ontario L0G 1T0 (CA); VAN TUYL, David J., Holland Landing, Ontario L9N 1C3 (CA)
(74) Representative: Garratt, Peter Douglas
(86) International application number: PCT/IB2000/001543
(87) International publication number: WO 2001/082656

(56) References cited:
- EP-A- 0 470 866
- WO-A-99/40559
- US-A- 4 593 234
- US-A- 5 361 017
- US-A- 5 537 003
- US-A- 5 670 776
- US-A- 5 779 346

## Description

### Background of the Invention

### Field of the Invention

The present invention relates to supplementary lighting devices utilizing an electroluminescent lighting element and a control system. In particular, the present invention relates to an electronic and mechanical control system coupled to an electroluminescent lighting element in order to provide user-adjustable light intensity, automatic output compensation, and an automatic daytime shutoff feature.

### Related Art

Supplementary lighting devices, such as night lights, are well known and commonly used for security and safety purposes. For example, supplementary lighting devices can be used to illuminate passageways and stairways to assist night travel or escape in an emergency. They are also commonly used to relieve night anxiety in children, decrease the probability of burglary, and may provide accent lighting.

Several different types of lighting elements can be used in supplementary lighting devices. For example, incandescent bulbs, fluorescent bulbs, neon-type gas discharge elements, and electroluminescent (EL) elements are possible lighting elements for supplementary lighting devices. When choosing a lighting element for a supplementary lighting device, several factors such as cost, safety, longevity, and illumination are generally taken into consideration.

Incandescent lighting elements offer low initial cost and are easily replaceable. Incandescent lighting elements also offer relatively bright light, which is preferable in security type applications. This bright light, however, is not desirable in night light type applications. Further, incandescent lights burn at very high temperatures. In a supplementary lighting type application, the bulbs are generally small such that the glass enclosure is close to the element. These supplementary lighting devices are generally located near the ground, within easy reach of small children. Therefore, incandescent lights create a safety risk to children. The point source emission of an incandescent light is less preferable than wide area emissions.

Neon type lighting elements could also be used in supplementary lighting devices. Neon lights are low cost. However, they are generally not user-replaceable, therefore the entire device must be discarded when the lighting element fails. Neon light elements, however, can last several years, although they initially have a precipitous rate of decline of output. Hence, the light they emit for most of their life is only a small fraction of their initial output. Neon lights are also generally dim. Neon lights are cool, thereby presenting less of a safety hazard than incandescent lights.

Fluorescent lighting elements are also used in supplementary lighting devices. Fluorescent lighting elements have a high initial cost, but can generally be replaced. However, because fluorescent lighting elements are generally difficult to find, supplementary lighting devices using them are generally throw-away type units. Fluorescent lighting elements produce a wide range of colors, and are generally very bright, without being a point source emission. Fluorescent lights are also generally cool, reducing the safety risk associated with hot lighting elements. Fluorescent lighting elements have a relatively long life span, but toward the end of their useful life, they often experience flickering of the lighting element.

Recently, electroluminescent (EL) lighting elements have become increasingly popular for use in supplementary lighting devices. EL lighting elements provide wide-area emission, are cool (i.e., will not burn to the touch), and have a very long life. Most EL lighting elements used in supplementary lighting devices are connected directly across the 110 volt, AC power from a common household outlet. However, these EL lighting elements have the disadvantage that they are generally dim, are not replaceable, and their intensity fades gradually over their life span. Additionally, EL lighting elements utilized in supplementary lighting devices also generally remain activated even during the day, when their relatively dim light is not required.

There exist well-known techniques for increasing the light intensity of EL lighting elements above that which is generated by connecting them across 110 AC power lines. Methods for increasing the output ofEL lighting elements include altering the voltage, altering the oscillation frequency of the alternating electricity, varying the duty cycle, and/or varying the waveform. However, these methods for increasing the output EL lighting elements still suffer from some of the same drawbacks as conventional EL lighting elements. For example, power boosted EL lighting elements still suffer illumination declines over the life of the light. Further, the amount of light cannot be controlled for specific applications.

U.S. Pat. No. 5,670,776 discloses an EL wall plate including a light sensor which detects the ambient light level and deactivates the EL panel when the ambient light reaches a certain pre-set level. The user can adjust the light intensity emitted from the EL panel by turning an adjusting stem of a variable resistor that regulates the current flowing through the drive circuit of the EL panel. U.S. Pat. No. 5,361,017 discloses an EL instrument panel with an anti-ageing feature, whereby the amount of light emitted EL lamp is maintained throughout the life of the lamp.

Supplementary lighting devices, regardless of the lighting element utilized, can also present a safety hazard to children due to their connection to a wall socket. These supplementary lighting devices are generally inserted into wall sockets located near the floor, within easy reach of small children. Children tend to play with the rear of the lighting device, where it is connected to the wall socket. Children can potentially burn themselves if they touch the blades of the supplementary lighting device while it is still connected to the wall socket.

### Summary of the Invention

As can be seen from the description above, there exists a need for a supplementary lighting device which includes the advantages of EL lighting elements while accounting for the disadvantages of such systems.

The present invention addresses these disadvantages by providing a supplementary lighting device with a user-adjustable dimmer that works in conjunction with a control system to vary the intensity of an EL lighting element.

The dimmer, preferably mechanically or optically, adjusts the amount of light detected by a light sensor from the EL lighting element. Therefore, by adjusting the dimmer, the amount of light actually detected by the light sensor is artificially varied, and the information from the light sensor is inputted into the control system, which then adjusts the amount of power provided to the EL lighting element in a closed loop feedback system. This arrangement simultaneously allows the control system to adjust for ageing of the EL lighting element.

Furthermore, the light sensor, or an additional one, may simultaneously detect ambient light, and depending on the amount of ambient light detected, the control system can completely shut off the EL lighting element. This provides a "daytime off" feature which conserves the EL lighting element and improves longevity of the device.

The EL lighting element is also replaceable. The device is designed such that a guide-way aligns the EL lighting element into mechanical and electrical contact with the control system. The guide-way is the only path from the user-accessible area of the device to the control system electronics. In addition, the device may be designed such that the EL lighting element is not accessible until the device is disconnected from a power source. In particular, the window covering the EL lighting element is coupled to the housing of the supplementary lighting device via a fastener which cannot be uncoupled without first disconnecting the device from the power source. This allows for safe replacement of the EL lighting element.

Another feature of the present invention is a safety device to prevent electrocution on electrical connection blades of the device while the device is still connected to a power source. In particular, a protector covers the electrical connection blades when the blades are removed from a power source. The protector retracts as the connection blades are inserted into a power source, and extends to cover the connection blades as the connection blades are removed from the power source.

### Brief Description of the Figures

The present invention is described with reference to the accompanying drawings, wherein:
Figure 1 is a functional block diagram of a supplementary lighting device of the present invention;
Figure 2 is an isometric view of a supplementary lighting device of the present invention;
Figure 3A is a front elevation view of a supplementary lighting device of the present invention;
Figure 3B is a front elevation view ofa supplementary lighting device of the present invention with the window removed;
Figure 4 is an elevation view of an electroluminescent lighting element;
Figure 5 is a cross-section of the supplementary lighting device of the present invention taken along lines 5-5 of Figure 3A;
Figure 6 is a rear elevation view of a supplementary lighting device of the present invention;
Figure 7 is a side elevation of a supplementary lighting device of the present invention and a conventional wall socket;
Figures 8A and 8B are cross-section views of an embodiment of a dimmer of the present invention;
Figures 9A-9C are isometric views of an alternative embodiment of a dimmer of the present invention;
Figures 10A and 10B are a second alternative embodiment of a dimmer of the present invention; and
Figure 11 is a block diagram of an embodiment of the control system of the present invention.

### Detailed Description of the Preferred Embodiments

A preferred embodiment of the present invention is now described with reference to the figures where like reference numbers indicate identical or functionally similar elements. Also in the figures, the left most digit of each reference number corresponds to the figure in which the reference number is first used. While specific configurations and arrangements are discussed, it should be understood that this is done for illustrative purposes only. A person skilled in the relevant art will recognize that other configurations and arrangements can be used without departing from the spirit and scope of the invention.

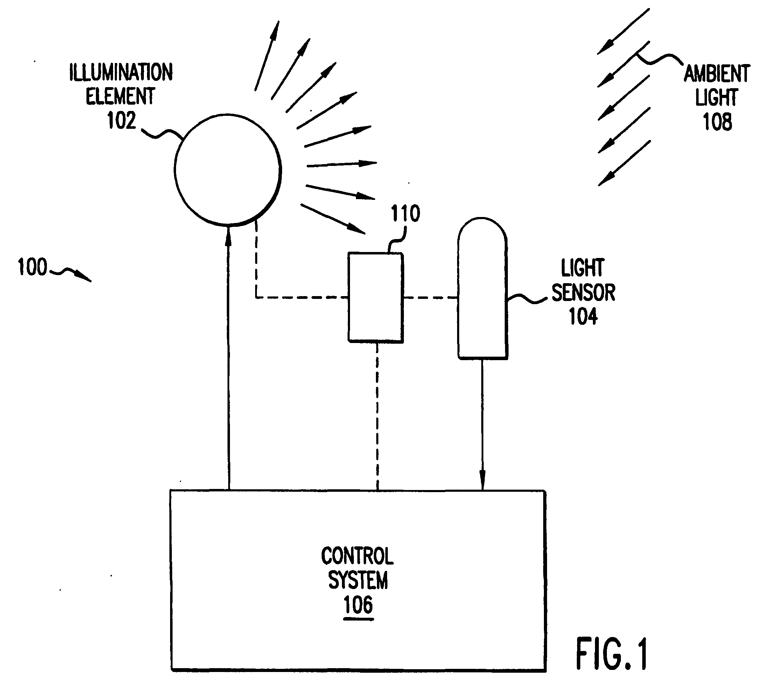

A preferred embodiment of a supplementary lighting device **100** is shown in block form in FIG. 1. FIG. 1 shows that device **100** includes an illumination element **102,** light sensor **104,** a control system **106** and a dimmer **110.** Light sensor **104** and illumination element **102** are both coupled to control system **106.** Control system **106** is preferably an electronic system which receives input from light sensor **104** and controls illumination element **102.** Dimmer **110** is user controlled and varies the output intensity of illumination element **102** working in conjunction with light sensor **104,** illumination element **102** and/or control system **106,** as will be more fully explained below.

Illumination element **102** is an electroluminescent (EL) lighting element which will be described in more detail below. Light sensor **104** is preferably a light detecting resistor (LDR) and is disposed in device **100** so as to receive input both from illumination element **102** and any ambient light **108.** Light sensor **104** can also be configured as two light sensors, one for detecting light emitted from illumination element **102** and one for detecting ambient light **108.** Light sensor **104** can also be a photo-diode, photo-resistor, photo-transistor, or other similar devices which can detect light intensity.

Control system **106** is designed to generate an adjustable intensity of brightness of illumination element **102.** A preferred method of generating an adjustable intensity ofbrightness uses a combination ofan astable oscillating circuit and a voltage multiplying circuit. The frequency of the oscillator is controlled by a pre-set signal as well as input received from light sensor **104.** In the example where light sensor **104** is an LDR, the resistance of the LDR is a function of the amount of light it receives. As the light intensity of ambient light **108** or illumination element **102** increases, the resistance of the LDR increases, thereby slowing the oscillator of control system **106.** As the oscillator slows, the intensity of illumination element **102** decreases. As would be apparent to one skilled in the relevant art, depending on the pre-set levels of control system **106**, illumination element **102** can be controlled such that when ambient light **108** is detected by light sensor **104** which is consistent with daylight or artificially lighted conditions, the oscillator is slowed such that illumination element **102** is turned "off."

It can be appreciated that because light sensor **104** also receives light emitting from illumination element **102,** control system **106** acts as an intensity regulator to compensate for the decreased output of EL lighting elements due to ageing. Therefore, with a pre-set intensity for illumination element **102,** as illumination element ages and its light intensity diminishes, light sensor **104** detects less light emitting from illumination element **102.** This information is transmitted to control system **106,** which increases the power to illumination element **102.** This provides an automatic intensity regulation feature which compensates for the effects of ageing in illumination element **102.**

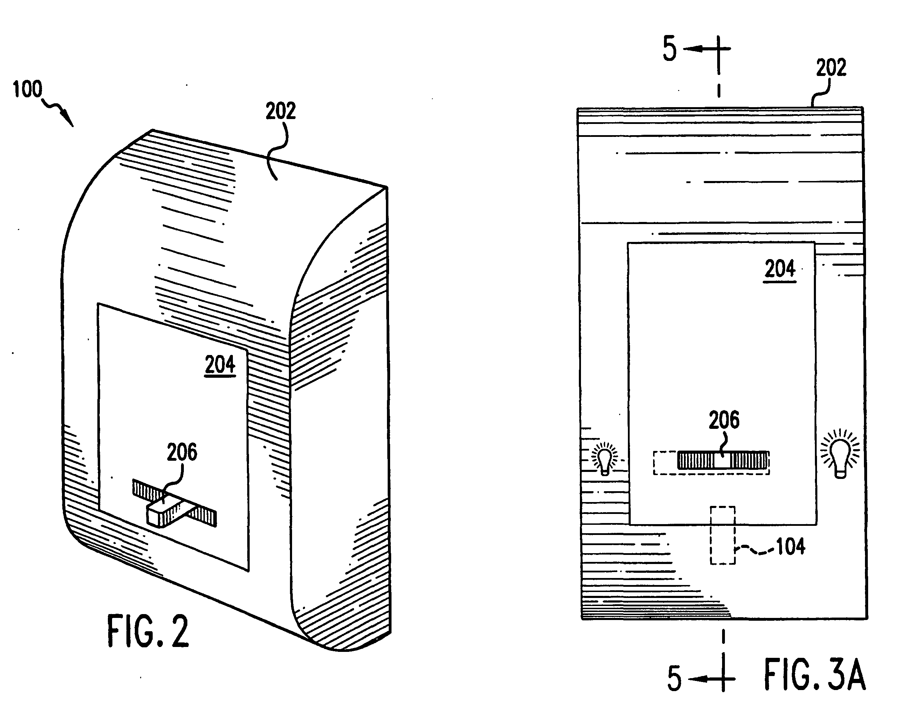

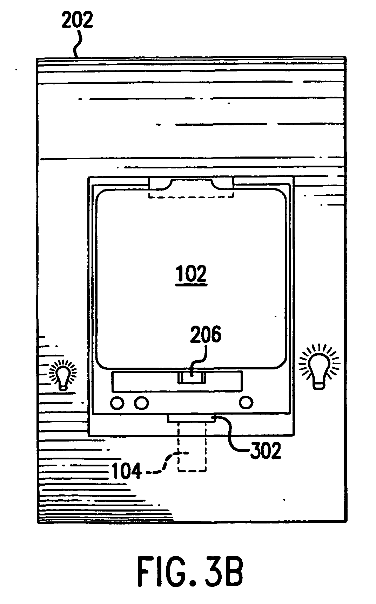

FIG. 2 shows a preferred embodiment of supplementary lighting device **100.** Device **100** includes a housing **202,** a window **204,** and a dimmer control **206.** Dimmer control **206** allows the user to vary the pre-set intensity of illumination element **102.** Dimmer control **206** can allow user selection in a variety of ways, as will be more fully described below. FIG. 3A shows a front elevation view of device **100,** showing housing **202,** window **204,** and dimmer control **206.** Light sensor **104** is also shown in phantom. FIG. 3B shows a front elevation of device **100** with window **204** removed. It can be seen that illumination element **102** is located behind window **204.** Light sensor **104** can also been seen in FIG. 3B. Further, aperture **302** is located near light sensor **104** to allow detection of ambient light **108.**

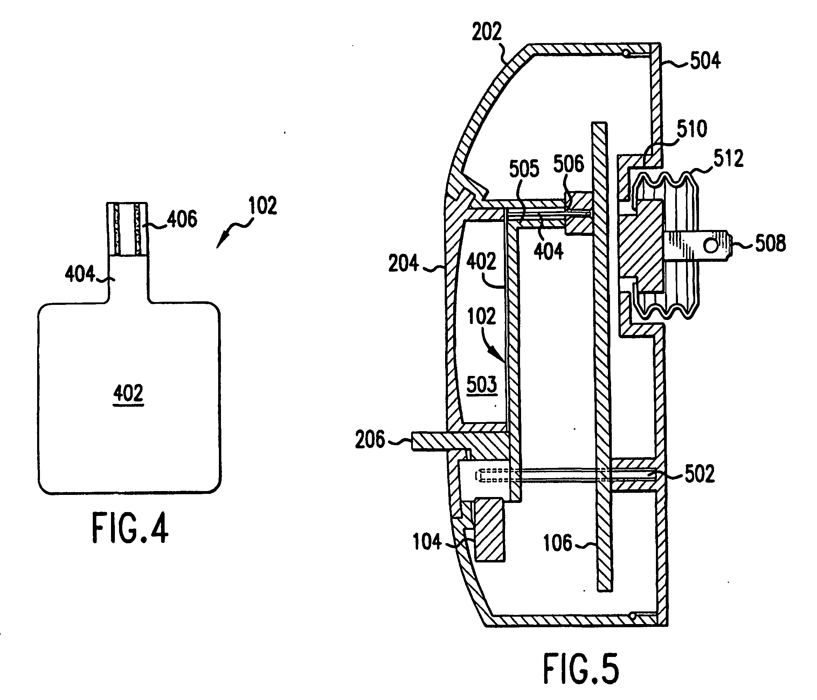

A preferred embodiment of illumination element **102** is shown in FIG. 4. Illumination element **102** includes a substantially planar illumination area **402** and an elongated connection tail **404** extending from illumination area **402**. Conductor strips **406** are disposed on connection tail **404.** Conductor strips **406** connect to control system **106** to provide power to illumination element **102,** as will be explained in more detail below.

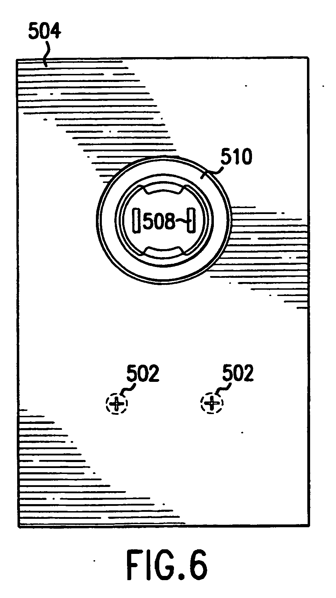

FIG. 5 shows a side cross-section view of device **100,** taken along line 5-5 of FIG. 3A. As can be seen, housing **202** and window **204** serve as an enclosure for device **100.** Window **204** is preferably coupled to housing **202** by a fastener **502** located at a rear surface **504** of housing **202.** Fastener **502** can be a screw or other similar type of fastening device. Window **204** may also be press fit into housing **202.** However, a fastener is a preferred attachment device. In particular, it is preferable that the fastener be located at rear surface **504** of housing **202,** because it requires removal of device **100** from the power source (wall socket) before window **204** can be removed. This safety precaution prevents one from attempting to replace illumination element **102** while device **100** is connected to the power source.

Window **204** preferably press fits illumination area **402** of illumination element **102** against a flat interior cavity **503** of housing **202.** Elongated tail **404** of illumination element **102** fits into a guide-way **505.** Guide-way **505** leads to connector **506** which connects to control system **106.** When elongated tail **404** is inserted through guide-way **505** and into connector **506,** conductor strips **406** make contact with connector **506,** such that control system **106** provides power to illumination element **102.** Guide-way **505** is the only path from the user-accessible area behind window **204** to control system **106.**

Also shown in FIG. 5 is an additional safety feature to prevent minor electrical shocks or bums to small children attracted to supplementary lighting device **100** due to its proximity to the ground and attractive light. Device **100** is normally plugged into a common household wall socket via electrical contact blades **508** which protrude from rear surface **504** of housing **202.** In a preferred embodiment of device **100,** a recess or cavity **510** is formed in rear surface **504** of housing **202** surrounding electrical contact blades **508.** A protector **512** is disposed in cavity **510** and extends the length of blades **508.** Protector **512** is collapsible such that it collapses into cavity **510** as blades **508** are inserted into the wall socket. When blades **508** are removed from the wall socket, protector **512** extends from cavity **510** to prevent contact with blades **508** until device **100** is completely removed from the wall socket. Protector **512** therefore prevents fingers, screwdrivers, toys, etc., from contacting blades **508** while blades are still in contact with the electrical power source. Protector **512** is preferably made of nonconductive and resilient material such as rubber, and is preferably constructed in the form of bellows, as shown, for easy expansion and contraction.

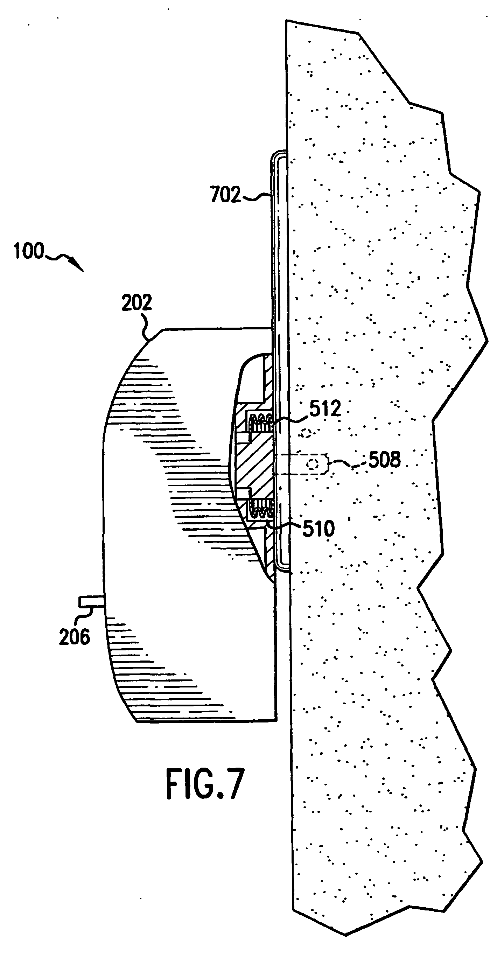

FIG. 6 shows an elevation view ofrear surface **504** of device **100,** including cavity **510,** electrical connection blades **508,** and fasteners **502.** FIG. 7 shows a side elevation of device **100** coupled to a standard household outlet **702** as a power source.

Explanation will now be provided for various embodiments of dimmer **110.** Dimmer **110** can vary the illumination intensity of illumination element **102** by directly acting with control system **106,** as shown in Figure 1. Preferably, however, dimmer **110** works in conjunction with light sensor **104** to mechanically and/or optically adjust the intensity of light output from illumination element **102** which is detected by light sensor **104.** As discussed above, the intensity of light outputted from illumination element **102** is increased or decreased by control system **106** depending on the amount of light detected from light sensor **104.** Therefore, dimmer **110** is constructed such that the amount of light detected by light sensor **104** can be artificially adjusted by the user.

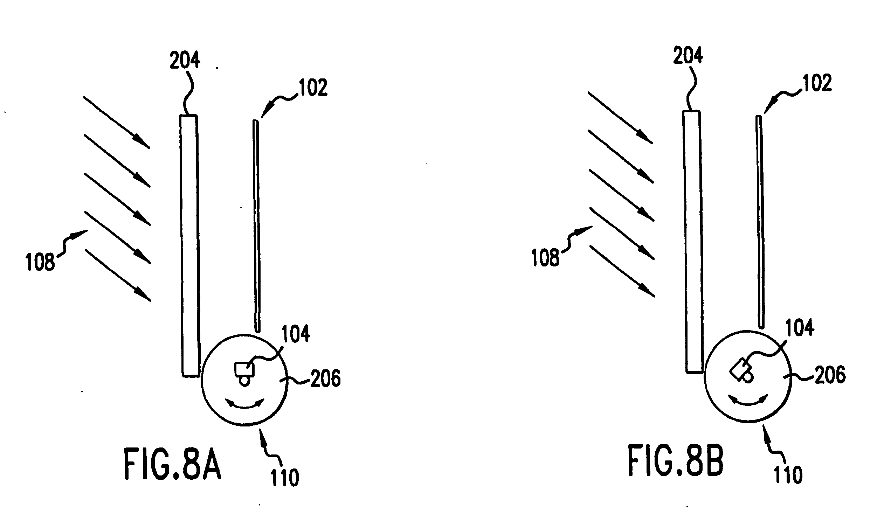

One embodiment of a dimmer **110** is shown in FIGs. 8A and 8B. In this preferred embodiment, dimmer **110** comprises dimmer control **206** constructed as a small wheel which can be adjusted by the user. Light sensor **104** is disposed within wheel dimmer control **206** such that when dimmer control **206** is moved, light sensor **104** is angled towards or away from illumination element **102.** When light sensor **104** is angled away from illumination element **102,** as shown in Fig. 8B, it detects less light from illumination element **102,** thereby causing control system **106** to increase power to illumination element **102,** to make increase the intensity of illumination element **102** until the system regulates itself. Conversely, when dimmer control **206** is moved in the other direction, as shown in FIG. 8A, light sensor **104** is angled towards illumination element **102,** thereby detecting more light from illumination element **102.** Consequently, control system **106** reduces power to illumination element **102** which dims the output. It would be apparent to one skilled in the relevant art from this description that light sensor **104** also moves slightly closerto and away from illumination element **102** when dimmer control **206** is moved. This further increases or decreases the amount of light detected by light sensor **104.** It can further be appreciated that if light sensor **104** is moved away from the center of dimmer control **206,** turning dimmer control **206** towards or away from illumination element **102** has a greater effect on the distance that light sensor **104** moves towards or away from illumination element **102.**

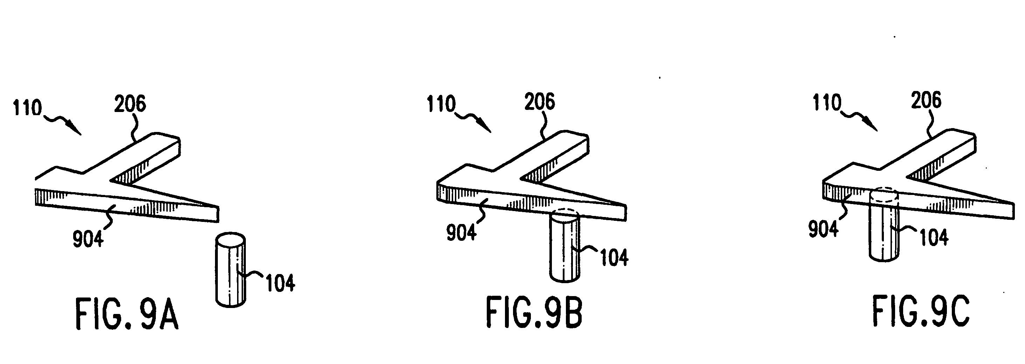

Another embodiment of dimmer **110** is shown in FIGs. 9A-9C. In this embodiment, dimmer **110** comprises dimmer control **206** and a mechanical dimmer element constructed as a sloped section **904.** Dimmer control **206** allows the user to slide sloped section **904** such that light sensor is progressively unblocked (FIG. 9A), partially blocked (FIG. 9B), or completely blocked (FIG. 9C). The amount of sloped section **904** blocking light sensor **104** adjusts the quantity of light detected by light sensor **104.** Therefore, if dimmer control **206** is moved such that sloped section **904** completely blocks light sensor **104,** light sensor **104** detects no light from illumination element **102,** thereby causing control system **106** to increase power to illumination element **102**. Similarly, as dimmer control **206** is moved such that sloped section **904** begins to uncover light sensor **104,** light sensor **104** detects more light from illumination element **102.** This causes control system **106** to decrease power to illumination element 102, thereby decreasing the intensity of light emitted from illumination element **102.**

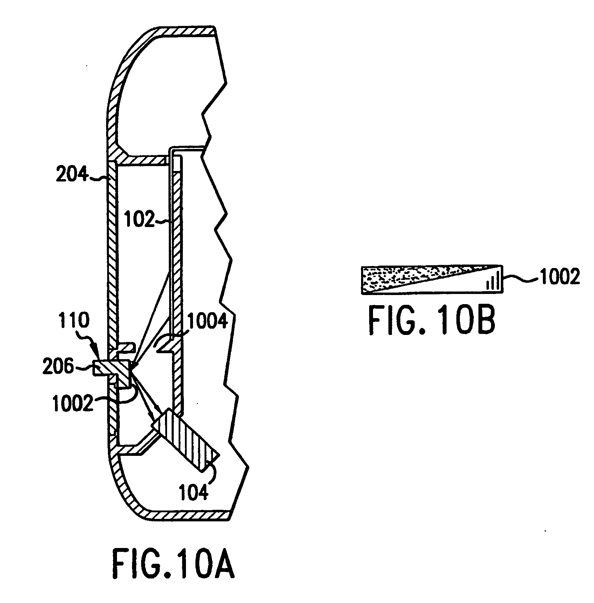

FIGs. 10A and 10B show another alternative embodiment of dimmer **110.** In this embodiment, dimmer **110** comprise a dimmer control **206** and a partially mirrored reflective section 1002. Reflective section 1002 has a sloped reflective surface across its face. Dimmer control 206 allows the user to slide reflective section 1002 such that light emitted from illumination element 102 is variably reflected as a function of the amount of reflective material on the part of reflective section 1002 which is positioned so as to conduct light to light sensor 104 via aperture 1004. The sliding position of dimmer control 206 therefore adjusts the quantity of light detected by light sensor **104.** As described above, if dimmer control **206** is moved such that reflective section **1002** reflects effectively no illumination from illumination element **102,** light sensor **104** detects no light from illumination element **102,** thereby causing control system **106** to increase power to illumination element 102. Similarly, as dimmer control 206 is moved such that reflective section 1002 reflects a greater amount oflight from illumination element 102, light sensor 104 detects more light from illumination element 102. This causes control system 106 to decrease power to illumination element 102, thereby decreasing the intensity of light emitted from illumination element **102.**

Several other possible embodiments of dimmer **110** exist. For example, dimmer control **206** could be coupled to illumination element **102** such that moving dimmer control 206 moves illumination element 102 towards or away from light sensor **104.** This has the same effect as moving light sensor **104** towards or away from illumination element **102,** as described above with respect to FIGs. 8A and 8B. Similarly, an adjustable reflecting device could be positioned between illumination source **102** and light sensor **104.** Dimmer control **206** adjusts the angle or position of the reflecting device such that light sensor 104 detects more or less light from illumination element 102. Several other similar devices could be designed that increase or decrease the amount of light detected by light sensor 104 from illumination element 102.

Note that dimmer **110** can be designed to completely shut off light from illumination source **102** to light detector **104,** as discussed above. This would allow maximum light output from illumination source 102, and also provides for the greatest amount of variability in output power (i.e., from 0% to 100%). It is also possible to design dimmer **110** such that it cannot completely prevent light from illumination source **102** from reaching light detector **104.** In this embodiment, the system could not produce maximum output of the illumination source, however, it could provide automatic decay adjustment over a longer period of the illumination element's life span. For example, the system could be designed such that when dimmer 110 is adjusted for maximum output, control system 106 would only provide 30% of its maximum power supplying capability to illumination element **102.** Although the maximum light output of such a system is initially less than if 100% of the power supplying capability were utilized, as illumination element **102** ages, the remaining 70% of control system's **106** power supplying capability would steadily come into effect. This would allow illumination element 102 to keep is artificial "maximum" output for a longer period of time.

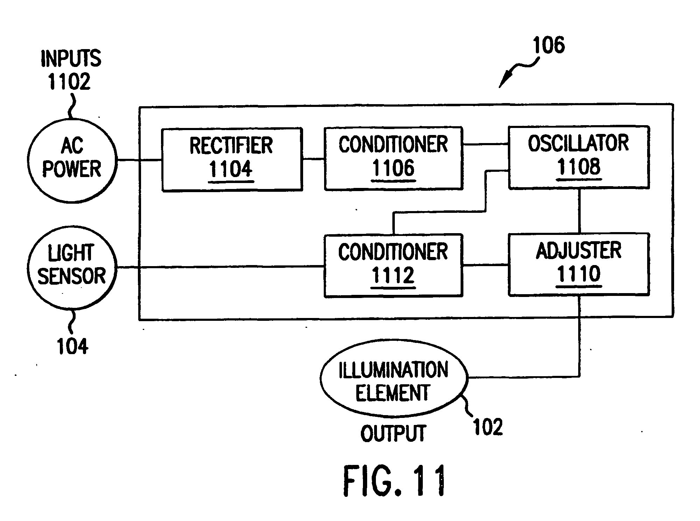

An exemplary embodiment of control system **106** is shown in block diagram form in FIG.11. As would be apparent to one of ordinary skill in the relevant art, this is only a particular embodiment of control system **106.** Several other designs could be utilized to achieve the same or similar result. Control system 106 receives input from AC power source 1102 and from light sensor 104. AC power is then treated through a rectifier 1104 and a power conditioner 1106. Rectifier 1104 can be a full wave rectifier, a half wave rectifier, a voltage doubler, or several other common design alternatives. Power conditioner 1106 can be comprised of capacitors, or resistors and capacitors, or inductors and capacitors, or various other common implementations. The purpose of power conditioner 1106 is to provide some amount of stabilization for the rectified power source. An oscillator **1108** receives the rectified and conditioned A/C power. Oscillator **1108** can generate a sinusoidal wave via an RC shift network, a Wien bridge, or an inductor-capacitor arrangement. Alternatively, oscillator **1108** can could generate a modified square wave or a composite wave-form via flip-flops, or an astable network, or via a free-running multi-vibrator, or via several other common circuit implementations, as would be apparent to one of ordinary skill in the relevant art. Oscillator **1108** could also use crystal or ceramic oscillators, or even the output of a microprocessor. Oscillator 1108 can be designed as either a fixed- or variable-controlled oscillator. If the design is a variable-controlled oscillator, then the conditioned signal from light sensor **104** can vary the rate of oscillation as a function of the amount of light sensed, and thus it would affect the intensity of the EL element.

The output of the oscillator **1108** is then sent to a power adjuster **1110** which conditions the output so that it is within the operating norms of illumination element **102.** The resulting power is then output from control system **106** and applied to the contacts of the EL lighting element, producing an appropriate glow. Power adjuster **1110** can be either a fixed- or variable-controlled regulator design, configured so as to adjust either the voltage or the current (or both). If the design is a variable-controlled regulator, then the conditioned signal from light sensor **104** varies the amount of power output during each oscillation as a function of the amount of light sensed, and thus it would affect the intensity of illumination element **102.**

The second input into control system **106** is from light sensor **104.** The input from light sensor **104** is conditioned by conditioner **1112** to adjust it to the needs of the other circuitry in control system **106.** The output from conditioner **1112** is then applied as a controlling signal for either oscillator **1108** or power adjuster **1110,** or both. Thus, the signal from light sensor **104** affects the intensity of illumination element **102.**

As the intensity of illumination element 102 varies, the changed intensity from illumination element 102 is detected by light sensor 104 transferred to control system 106, as described above. This allows for constant adjustment of the intensity of illumination element 102 to a desired setting, even when illumination element 102 begins to fade. As fading begins to occur, light sensor 104 will detect less light from illumination element 102, and power adjuster 1110 or oscillator **1108** of control system **106** will thereby increase the intensity of illumination element **102** until it reaches the intensity pre-set by the user using dimmer control **206.** Similarly, as dimmer control **206** is adjusted, light sensor **104** detects less or more light from illumination element **102.** Control system **106** automatically adjusts for this change, and power adjuster **1110** provides more or less power to illumination element **102.** This allows for user control of the intensity of illumination element **102** simply by adjusting dimmer control **206.**

In addition, when light sensor **104** is designed to detect ambient light **108** from the area surrounding device **100,** an increase in ambient light **108** will cause control system **106** to decrease the intensity of illumination element **102.** Therefore, control system **106** can be designed such that the amount of ambient light **108** detected by light sensor **104** will be sufficient to completely shut off illumination element **102** in daylight type conditions. This provides a "daytime off' feature which extends the serviceable life of illumination element **102.** Similarly, light sensor **104** can be designed such that it receives both ambient light and light emitted from illumination element **102.** Control system **106** can be designed such that the amount of ambient light **108** detected by light sensor 104 exceeds the amount of light detected from illumination element **102.** Further, dimmer **110** can be designed to affect only that amount of light detected by light sensor **104** which is emitted by illumination element **102.** This combination of design element allows the anti-ageing feature, the daytime-off feature, and the adjustable dimmer feature to be efficiently incorporated into a supplementary lighting device.

## Claims

1. A supplementary lighting device (100) comprising an electroluminescent lighting element (102) having a light intensity, a control system (106) coupled to said electroluminescent lighting element; wherein said control system (106) varies the light intensity of said electroluminescent lighting element (102), a user-adjustable dimmer (110) coupled to said control system, electrical connection blades for coupling the supplementary lighting device (100) to a standard alternating current, **characterized in that**:
the supplementary lighting device (100) includes a light sensor (104) coupled to said control system (106) and disposed in the device so as to detect light emitted from said electroluminescent lighting element (102), wherein said control system (106) varies the light intensity of said electroluminescent element (102) so that said control system (106) receives an input from said light sensor (104) which effectively matches a pre-set level; and
said user-adjustable dimmer (110) includes a mechanical dimmer element (206, 904, 1004) positioned to optically and/or mechanically adjust the amount of light which is detected by said light sensor (104) from said electroluminescent lighting element (102).

2. The supplementary lighting device of claim 1, wherein said mechanical dimmer element comprises a shutter which progressively blocks or unblocks light emitted from said electroluminescent lighting element from being detected by said light sensor according to the adjustment of said dimmer control.

3. The supplementary lighting device of claim 1, wherein said mechanical dimmer element comprises a reflector which progressively reflects more or less light emitted from said electroluminescent lighting element onto said light sensor, according to the adjustment of said dimmer control.

4. The supplementary lighting device of claim 1, wherein said mechanical dimmer element comprises a lens which progressively focuses more or less light emitted from said electroluminescent lighting element onto said light sensor, according to the adjustment of said dimmer control.

5. The supplementary lighting device of claim 1, wherein said mechanical dimmer element comprises a light-pipe which progressively directs more or less light emitted from said electroluminescent lighting element onto said light sensor according to the adjustment of said dimmer control.

6. The supplementary lighting device ofclaim 1, wherein said dimmer control is mechanically coupled to said electroluminescent lighting element and user adjustment of said dimmer control moves at least a portion of said electroluminescent lighting element towards or away from said light sensor.

7. The supplementary lighting device ofclaim 1, wherein said dimmer control is mechanically coupled to said light sensor and user adjustment of said dimmer control moves at least a portion of said light sensor towards or away from said electroluminescent lighting element.

8. The supplementary lighting device of claim 1,wherein said dimmer control is mechanically coupled to said light sensor and user adjustment of said dimmer control varies the angle of said light sensor such that said light sensor detects more or less light emitted from said electroluminescent lighting element.

9. The supplementary lighting device of claim 1, wherein said dimmer control is mechanically coupled to said electroluminescent lighting element and user adjustment of said dimmer control varies the angle of at least some portion of said elecroluminescent lighting element such that said light sensor detects more or less light emitted from said electroluminescent lighting element.

10. The supplementary lighting device of claim 1, wherein said light sensor also detects ambient light around the device and said control system reduces or eliminates the light intensity of said electroluminescent lighting element when the input received from said light sensor effectively reaches a pre-set level.

11. The supplementary lighting device of claim 1, further comprising a second light sensor coupled to said control system which detects ambient light around the device and said control system reduces or eliminates the light intensity of said electroluminescent lighting element when the input received from said second light sensor reaches a pre-set level.

## Patentansprüche

1. Zusatz-Beleuchtungsvorrichtung (100) mit einem elektroluminiszierenden Beleuchtungselement (102) mit einer Lichtstärke, einem Steuersystem (106), das an das elektroluminiszierende Beleuchtungselement gekoppelt ist, wobei das Steuersystem (106) die Lichtstärke des elektroluminiszierenden Beleuchtungselements (102) variiert, einem bedienereinstellbaren Dimmer (110), der mit dem Steuersystem gekoppelt ist, elektrischen Verbindungsschenkeln zum Koppeln der Zusatz-Beleuchtungsvorrichtung (100) mit einem Standard-Wechselstrom, **dadurch gekennzeichnet, dass**
die Zusatz-Beleuchtungsvorrichtung (100) einen Lichtsensor (104) aufweist, der mit dem Steuersystem (106) gekoppelt und in der Vorrichtung so angeordnet ist, dass er von dem elektroluminiszierenden Beleuchtungselement (102) abgegebenes Licht detektiert, wobei das Steuersystem (106) die Lichtstärke des elektroluminiszierenden Beleuchtungselements (102) so variiert, dass das Steuersystem (106) einen Input von dem Lichtsensor (104) empfängt, der effektiv einer vorgegebenen Höhe entspricht; und
der bedienereinstellbare Dimmer (110) ein mechanisches Dimmerelement (206, 904, 1004) aufweist, das so angeordnet ist, dass es die Lichtmenge von dem elektroluminiszierenden Beleuchtungselement, die von dem Lichtsensor (104) detektiert wird, optisch und/oder mechanisch einstellt.

2. Zusatz-Beleuchtungsvorrichtung nach Anspruch 1, wobei das mechanische Dimmerelement einen Verschluss aufweist, der Licht, das von dem elektroluminiszierellden Beleuchtungselement abgegeben wird, gemäß der Einsteilung der Dimmersteuerung stufenweise von der Detektierung durch den Lichtsensor abblockt oder für diese freigibt.

3. Zusatz-Beleuchtungsvorrichtung nach Anspruch 1, wobei das mechanische Dimmerelement einen Reflektor aufweist, der gemäß der Einstellung der Dimmersteuerung mehr oder weniger des von dem elektroluminiszierenden Beleuchtungselement abgegebenen Lichts auf den Lichtsensor reflektiert.

4. Zusatz-Beleuchtungsvorrichtung nach Anspruch 1, wobei das mechanische Dimmerelement eine Linse aufweist, die gemäß der Einstellung der Dimmersteuerung mehr oder weniger des von dem elektroluminiszierenden Beleuchtungselement abgegebenen Lichts stufenweise auf den Lichtsensor fokussiert.

5. Zusatz-Beleuchtungsvorrichtung nach Anspruch 1, wobei das mechanische Dimmerelement einen Hohllichtleiter aufweist, der gemäß der Einstellung der Dimmersteuerung mehr oder weniger des von dem elektroluminiszierenden Beleuchtungselement abgegebenen Lichts auf den Lichtsensor richtet.

6. Zusatz-Beleuchtungsvorrichtung nach Anspruch 1, wobei die Dimmersteuerung mechanisch mit dem elektroluminiszierenden Beleuchtungselement gekoppelt ist und die Bedienereinstellung der Dimmersteuerung wenigstens einen Teil des elektroluminiszierenden Beleuchtungselements auf den Lichtsensor zu oder davon weg bewegt.

7. Zusatz-Beleuchtungsvorrichtung nach Anspruch 1, wobei die Dimmersteuerung mechanisch mit dem Lichtsensor gekoppelt ist und die Bedienereinstellung der Dimmersteuerung wenigstens einen Teil des Lichtsensors auf das elektroluminiszierende Beleuchtungselement zu oder davon weg bewegt.

8. Zusatz-Beleuchtungsvorrichtung nach Anspruch 1, wobei die Dimmersteuerung mechanisch mit dem Lichtsensor gekoppelt ist und die Bedienereinstellung der Dimmersteuerung den Winkel des Lichtsensors so variiert, dass der Lichtsensor mehr oder weniger des von dem elektroluminiszierenden Beleuchtungselement abgegebenen Lichts detektiert.

9. Zusatz-Beleuchtungsvorrichtung nach Anspruch 1, wobei die Dimmersteuerung mechanisch an das elektroluminiszierende Beleuchtungselement gekoppelt ist und die Bedienereinstellung der Dimmersteuerung den Winkel von wenigstens einem Teil des elektroluminiszierenden Beleuchtungselements so variiert, dass der Lichtsensor mehr oder weniger des von dem elektroluminiszierenden Beleuchtungselement abgegebenen Lichts detektiert.

10. Zusatz-Beleuchtungsvorrichtung nach Anspruch 1, wobei der Lichtsensor auch Umgebungslicht um die Vorrichtung herum detektiert und das Steuersystem die Lichtstärke des elektroluminiszierenden Beleuchtungselements reduziert oder eliminiert, wenn der von dem Lichtsensor empfangene Input effektiv eine vorgegebene Höhe erreicht

11. Zusatz-Beleuchtungsvorrichtung nach Anspruch 1, die des Weiteren einen zweiten Lichtsensor aufweist, der mit dem Steuersystem gekoppelt ist und Umgebungslicht um die Vorrichtung herum detektiert, wobei das Steuersystem die Lichtstärke des elektroluminiszierenden Beleuchtungselements reduziert oder eliminiert, wenn der von dem zweiten Lichtsensor empfangene Input eine vorgegebene Höhe erreicht.

## Revendications

1. Dispositif d'éclairage auxiliaire (100) comprenant un élément d'éclairage électroluminescent (102) ayant une intensité de lumière, un système de commande (106) relié audit élément d'éclairage électroluminescent, ledit système de commande (106) faisant varier l'intensité de lumière dudit élément de lumière électroluminescent (102), un variateur réglable par l'utilisateur (110) relié audit système de commande, des lames de connexion électrique servant à relier le dispositif d'éclairage auxiliaire (100) à un courant alternatif standard, **caractérisé en ce que**:
le dispositif d'éclairage auxiliaire (100) comprend un capteur de lumière (104) relié audit système de commande (106) et disposé dans le dispositif de façon à détecter la lumière émise par ledit élément d'éclairage électroluminescent (102), dans lequel ledit système de commande (106) fait varier l'intensité de lumière dudit élément électroluminescent (102) de façon à ce que ledit système de commande (106) reçoive une entrée en provenance dudit capteur de lumière (104) qui correspond effectivement à un niveau préréglé; et
ledit variateur réglable par l'utilisateur (110) comprend un élément de variateur mécanique (206, 904, 1004) positionné de façon à ajuster de manière optique et/ou mécanique la quantité de lumière qui est détectée par ledit capteur de lumière (104) à partir dudit élément d'éclairage électroluminescent (102).

2. Dispositif d'éclairage auxiliaire selon la revendication 1, dans lequel ledit élément de variateur mécanique comprend un obturateur qui, en fonction du réglage de ladite commande de variateur, bloque ou débloque progressivement, pour sa détection par ledit capteur de lumière, la lumière émise par l'élément d'éclairage électroluminescent.

3. Dispositif d'éclairage auxiliaire selon la revendication 1, dans lequel ledit élément de variateur mécanique comprend un réflecteur qui réfléchit progressivement sur ledit capteur de lumière une quantité plus ou moins grande de la lumière émise par ledit élément d'éclairage électroluminescent, en fonction du réglage de ladite commande de variateur.

4. Dispositif d'éclairage auxiliaire selon la revendication 1, dans lequel ledit élément de variateur mécanique comprend une lentille qui focalise progressivement sur ledit capteur de lumière une quantité plus ou moins grande de la lumière émise par ledit élément d'éclairage électroluminescent, en fonction du réglage de ladite commande de variateur.

5. Dispositif d'éclairage auxiliaire selon la revendication 1, dans lequel ledit élément de variateur mécanique comprend un conduit de lumière qui orienté progressivement vers ledit capteur de lumière une quantité plus ou moins grande de la lumière émise par ledit élément d'éclairage électroluminescent, en fonction du réglage de ladite commande de variateur.

6. Dispositif d'éclairage auxiliaire selon la revendication 1, dans lequel ladite commande de variateur est reliée mécaniquement audit élément d'éclairage électroluminescent et le réglage par l'utilisateur de ladite commande de variateur a pour effet de déplacer au moins une partie dudit élément d'éclairage électroluminescent pour la rapprocher ou l'éloigner dudit capteur de lumière.

7. Dispositif d'éclairage auxiliaire selon la revendication 1, dans lequel ladite commande de variateur est reliée mécaniquement audit capteur de lumière et le réglage par l'utilisateur de ladite commande de variateur a pour effet de déplacer au moins une partie dudit capteur de lumière pour la rapprocher ou l'éloigner dudit élément d'éclairage électroluminescent.

8. Dispositif d'éclairage auxiliaire selon la revendication 1, dans lequel ladite commande de variateur est reliée mécaniquement audit capteur de lumière et le réglage par l'utilisateur de ladite commande de variateur fait varier l'angle dudit capteur de lumière de telle sorte que ledit capteur de lumière détecte une quantité plus ou moins grande de la lumière émise par ledit élément d'éclairage électroluminescent.

9. Dispositif d'éclairage auxiliaire selon la revendication 1, dans lequel ladite commande de variateur est reliée mécaniquement audit élément d'éclairage électroluminescent et le réglage par l'utilisateur de ladite commande de variateur fait varier l'angle d'au moins une certaine partie dudit élément d'éclairage électroluminescent de telle sorte que ledit capteur de lumière détecte une quantité plus ou moins grande de la lumière émise par ledit élément d'éclairage électroluminescent.

10. Dispositif d'éclairage auxiliaire selon la revendication 1, dans lequel ledit capteur de lumière détecte également la lumière ambiante autour du dispositif et ledit système de commande réduit ou élimine l'intensité de lumière dudit élément d'éclairage électroluminescent lorsque l'entrée reçue dudit capteur de lumière atteint effectivement un niveau préréglé.

11. Dispositif d'éclairage auxiliaire selon la revendication 1, comprenant, en outre, un second capteur de lumière relié audit système de commande, qui détecte la lumière ambiante autour du dispositif et ledit système de commande réduit ou élimine l'intensité de lumière dudit élément d'éclairage électroluminescent lorsque l'entrée reçue dudit second capteur de lumière atteint un niveau préréglé.
